# FASCICULE DE BREVET EUROPEEN

(11) **EP 0 665 934 B1**
(45) Date de publication et mention de la délivrance du brevet: **23.04.1997**
(21) Numéro de dépôt: 93924100.6
(22) Date de dépôt: 20.10.1993
(51) Int. Cl.: F16N 7/38, F16H 57/05, B65G 45/08, F16N 29/02, F16N 21/04

(54) **DISPOSITIF DE LUBRIFICATION AUTOMATIQUE D'UNE CHAINE**
VORRICHTUNG ZUM SELBSTÄNDIGEN SCHMIEREN EINER KETTE
AUTOMATIC CHAIN LUBRICATION DEVICE

(30) Priorité: 20.10.1992 FR 9212825
(43) Date de publication de la demande: 09.08.1995
(73) Titulaire: CONSTRUCTIONS INDUSTRIELLES DE LA MEDITERRANEE- CNIM, F-75008 Paris (FR)
(72) Inventeur: SONNOIS, Marc, F-75017 Paris (FR)
(74) Mandataire: Thinat, Michel
(86) Numéro de dépôt international: FR9301033
(87) Numéro de publication internationale: WO9409308

(56) Documents cités:
- DE-A- 3 129 048
- FR-A- 723 799
- FR-A- 986 768
- FR-A- 1 221 151
- FR-A- 1 453 396
- GB-A- 724 347
- GB-A- 787 810
- US-A- 2 917 133

## Description

La présente invention concerne un dispositif de lubrification automatique d'une chaîne. Il est plus particulièrement destiné à la lubrification des chaînes utilisées pour l'entraînement des marches et des escaliers mécaniques, et peut également avantageusement être utilisé pour la lubrification d'autres chaînes munies de graisseurs, telles que celles qui peuvent être utilisées dans des convoyeurs ou autres dispositifs mécaniques.

La description de l'invention fera ressortir que le dispositif de l'invention peut être utilisé pour l'entretien de chaînes munies de graisseurs ayant des positions transversales diverses et dont la position longitudinale n'est connue qu'avec une certaine incertitude. Ses applications sont donc très variées.

La partie mobile d'un escalier mécanique est essentiellement constituée de deux chaînes de Galles parallèles et reliées entre elles par des entretoises sur lesquelles les marches sont fixées. La chaîne est donc constituée par des maillons articulés les uns par rapport aux autres autour de rouleaux.

Chaque articulation doit être parfaitement lubrifiée ; cela est une condition nécessaire pour assurer une bonne durée de vie à de telles chaînes. Aussi, la lubrification apparaît-elle comme une opération importante, gage d'une longue vie des chaînes.

On considère qu'une chaîne utilisée dans des conditions habituelles et faisant l'objet d'une maintenance très professionnelle a une durée théorique moyenne d'environ vingt ans ; cette durée théorique est totalement dépendante de la fréquence et de la qualité des opérations de lubrification.

Les exploitants des escaliers mécaniques ont deux approches opposées pour l'entretien de ces matériels :
- soit une maintenance très lourde qui réduit les opérations de réparation, mais impliquent un budget d'entretien très important ;
- soit une maintenance minimum qui maintient le budget de maintenance à un niveau plus acceptable, mais engendre des pannes diverses plus fréquentes.

Les défauts de lubrification (essentiellement absence ou insuffisance de lubrifiant) génèrent deux types de dysfonctionnements :
- d'une part, ils peuvent engendrer le blocage d'une articulation ("chapeau de gendarme") et endommager les équipements situés à proximité de la chaîne, provoquer du bruit et des secousses qui sont retransmises aux marches et ressenties par le public ;
- d'autre part, ils engendrent une usure généralisée de la chaîne qui peut produire du jeu entre les marches, ce qui est inacceptable pour la sécurité des usagers.

Les dispositifs actuellement utilisés pour lubrifier les chaînes d'un escalier mécanique sont de deux types :
- lubrification par huile réalisée soit par dépôt goutte à goutte, soit par projection ;
- lubrification par injection dans les articulations, le lubrifiant utilisé étant généralement de la graisse.

La lubrification par huile permet d'automatiser l'opération, mais présente un certain nombre d'inconvénients :
- les surfaces de frottement (contact, acier-acier) sont difficiles à atteindre, car l'huile a tendance à rester à la surface des pièces ;
- les dispositifs de lubrification nécessaires sont complexes ;
- cette technique présente des risques pour l'environnement ;
- cette technique présente également des risques pour la sécurité, car l'huile a une inflammabilité supérieure à celle de la graisse.

La lubrification par injection est beaucoup plus répandue, elle consiste à injecter le lubrifiant sous pression à l'intérieur des articulations (ou axes) des maillons de la chaîne qui est alors munie de graisseurs. Cette solution est techniquement plus efficace puisque le lubrifiant est ainsi injecté entre les surfaces en contact. Toutefois, jusqu'à présent, les tentatives d'automatisation de la lubrification par injection ont rencontré de graves difficultés, de telle sorte que ces opérations restent encore, la plupart du temps, manuelles. Cela entraîne, bien entendu, un certain nombre d'inconvénients :
- la durée de graissage d'une chaîne est extrêmement longue. A titre d'exemple, une chaîne moyenne mécanique d'escalier comporte environ 450 graisseurs et son graissage nécessite environ dix heures de travail à deux personnes.
- la fiabilité de l'opération de graissage est entièrement liée à la compétence et à la conscience professionnelle des opérateurs sans qu'aucune possibilité de contrôle de cette qualité ne puisse être mise en oeuvre.

C'est la raison pour laquelle différentes tentatives d'automatisation ont déjà été faites.

Le brevet US-A-2 917 133 décrit un dispositif de lubrification automatique selon la première partie de la revendication 1.

Le brevet français FR-A-1.453.396 décrit un appareil de lubrification automatique destiné à l'injection de lubrifiant pendant le déplacement du dispositif à graisser qui est, plus particulièrement, destiné aux dispositifs de graissage et de roulement de convoyeurs à chaîne.

Dans l'appareil décrit, l'injecteur de lubrifiant mobile, disposé transversalement par rapport au chemin suivi par le transporteur, coopère avec des butées disposées sur le transporteur, de sorte qu'il est entraîné dans le sens et à la même vitesse que celui-ci ; un piston actionné hydrauliquement entraîne l'injecteur vers le point à graisser et produit l'injection du lubrifiant en maintenant un contact étanche entre l'injecteur et le point à graisser ; l'injecteur reprend alors sa position de départ, le cycle est actionné à nouveau.

Toutefois, ce dispositif paraît présenter un certain nombre d'inconvénients qui ont probablement freiné sa généralisation :
- cet appareil ne possède pas de moyens permettant d'éviter l'injection de lubrifiant lorsque, pour une raison quelconque, il n'y a pas de graisseur à une position où il y aurait dû en avoir un ;
- cet appareil ne peut coopérer qu'avec des graisseurs ayant toujours la même position transversale ;
- en raison de sa complexité, il n'est pas aisément montable ou démontable.

De manière générale, c'est un appareil rigide qui comprend peu de possibilités de rattrapage d'un éventuel jeu de positionnement de graisseurs.

Le brevet anglais GB-A-787.810 décrit un système de même origine que le précédent, plus ancien, qui présente les mêmes inconvénients.

De même, le brevet français FR-A-723.799 est un brevet ancien visant un objectif analogue, mais ne présentant également aucun moyen de rattrapage de jeu.

Le brevet FR-A-869.041 qui vise lui aussi un objectif analogue, présente un système de rattrapage de jeu de positionnement des graisseurs constitué par une rotule mécanique située au niveau de la tête d'injection. Ce dispositif est difficile à mettre en oeuvre et ne donne pas satisfaction dans son utilisation pratique.

Ces différents dispositifs de l'art antérieur font ressortir certaines difficultés de réalisation d'un dispositif de lubrification automatique d'une chaîne, en particulier :
- la nécessité pour un tel dispositif de pouvoir coopérer avec des graisseurs dont la position n'est définie qu'avec une certaine incertitude. En particulier, certaines chaînes comportent des roues de guidage situées à l'extérieur, ces roues possédant aussi des graisseurs dont la position transversale diffère notablement (20 à 30 mm) de celle des graisseurs situés sur la chaîne.
- la difficulté de concevoir un dispositif qui puisse coopérer avec des graisseurs occupant des positions transversales variées,
- la nécessité pour un tel dispositif de ne produire l'injection de lubrifiant que lors de la présence effective d'un graisseur et de sa coopération convenable avec le dispositif. Cela est nécessaire, d'une part, pour éviter le gaspillage de lubrifiant, mais surtout pour éviter les perturbations engendrées par le lubrifiant pouvant être reçu par des éléments non prévus à Cet effet.

L'invention vise à résoudre ces différentes difficultés.

De plus, l'invention a également pour objectif de proposer un dispositif qui puisse être, au choix, monté en permanence sur la chaîne à entretenir avec une position de repos et une position active, ou bien mis en place puis démonté lors de l'opération de lubrification des chaînes de l'escalier.

C'est également un objectif de l'invention de proposer un dispositif de lubrification automatique d'une chaîne qui permette un contrôle simple des opérations de lubrification, et permette même d'assurer un réel contrôle qualité de l'entretien de la chaîne et de son fonctionnement.

L'invention propose un dispositif de lubrification automatique d'une chaîne agencée de façon à être utilisable avec n'importe quel type de chaîne à lubrifier tout en étant d'une structure relativement simple.

A cet effet, le dispositif de l'invention telle que défini dans la revendication 1 comprend un moyen d'accouplement du chariot mobile à la châine et constitué par un bras d'entraînement solidaire du chariot mobile portant une tête d'entraînement comprenant une roue à branches radiales mobile autour d'un axe transversal à la chaîne et bloquée en rotation au début de chaque cycle de lubrification de façon que l'une des branches de la roue soit en contact d'appui avec un axe correspondant de la chaîne pour assurer le positionnement et l'entraînement longitudinal de chariot jusqu'à une position de fin de course du chariot à laquelle la roue est débloquée automatiquement par le mouvement de la chaîne et la force de rappel du moyen sur le chariot qui est ramené à sa position initiale de début d'un cycle suivant de lubrification.

Ainsi, la structure particulière du moyen d'accouplement définie ci-dessus permet d'accoupler le chariot mobile à n'importe quel type de chaîne puisqu'il suffit de placer la roue de façon que l'une de ses branches soit contactée par un axe de la chaîne en mouvement, cet axe pouvant être constitué par exemple par un galet de transporteur ou par un rouleau d'une chaîne formée de maillons articulés autour de rouleaux.

De plus, la roue à branches radiales du moyen d'accouplement du dispositif de lubrification de l'invention permet d'assurer un positionnement et entraînement longitudinal précis du chariot et donc du mécanisme d'injection de lubrifiant porté par celui-ci relativement au graisseur de la chaîne.

Selon différents modes de réalisation préférés, défini dans les revendications dépendantes 2 à 12, l'invention comporte les caractéristiques suivantes, prises selon toutes leurs combinaisons techniquement possibles :
- chaque tête de graissage comprend une soupape de fermeture, dont l'ouverture est commandée par le contact de la tête de graissage avec un graisseur.
- les moyens de déplacement transversal sont liés aux moyens de déplacement longitudinal par l'intermédiaire d'au moins un support élastique et comportent une ouverture conique ;
- les moyens de déplacement transversal comportent un vérin pneumatique ;
- les moyens de positionnement longitudinal comportent un système de rails destinés à être parallèles à la chaîne, un chariot mobile sur le système de rails portant les systèmes d'injection ;
- les moyens de positionnement longitudinal comportent un bras d'entraînement muni d'une tête d'entraînement coopérant avec les maillons de la chaîne, et un ressort de rappel apte à ramener le chariot à une position d'origine ;
- la tête d'entraînement comporte une roue mobile autour d'un axe portant des branches aptes à coopérer avec les maillons et à être positionnés contre un rouleau pour assurer le positionnement et l'entraînement longitudinal du chariot ;
- la tête d'entraînement comporte un système à au moins un cliquet assurant un blocage temporaire de la roue autour de son axe, de façon à assurer l'entraînement du chariot par la chaîne, puis sa libération ;
- le système à cliquet comporte une position de repos assurant la libération des autres éléments du dispositif de lubrification par rapport à la roue ;
- le dispositif de lubrification automatique comporte un capteur de déplacement permettant la mesure de la course d'injection de lubrifiant dans la tête de graissage ;
- le dispositif de lubrification automatique comporte des moyens informatiques permettant la mise en mémoire des mesures fournies par les capteurs de déplacement pour chaque graisseur ;
- la mesure fournie par le capteur de déplacement et mise en mémoire est la courbe de volume de lubrifiant injecté à travers le graisseur en fonction du temps.

Un mode de réalisation particulier de l'invention est décrit ci-après en référence aux dessins annexés dans lesquels :

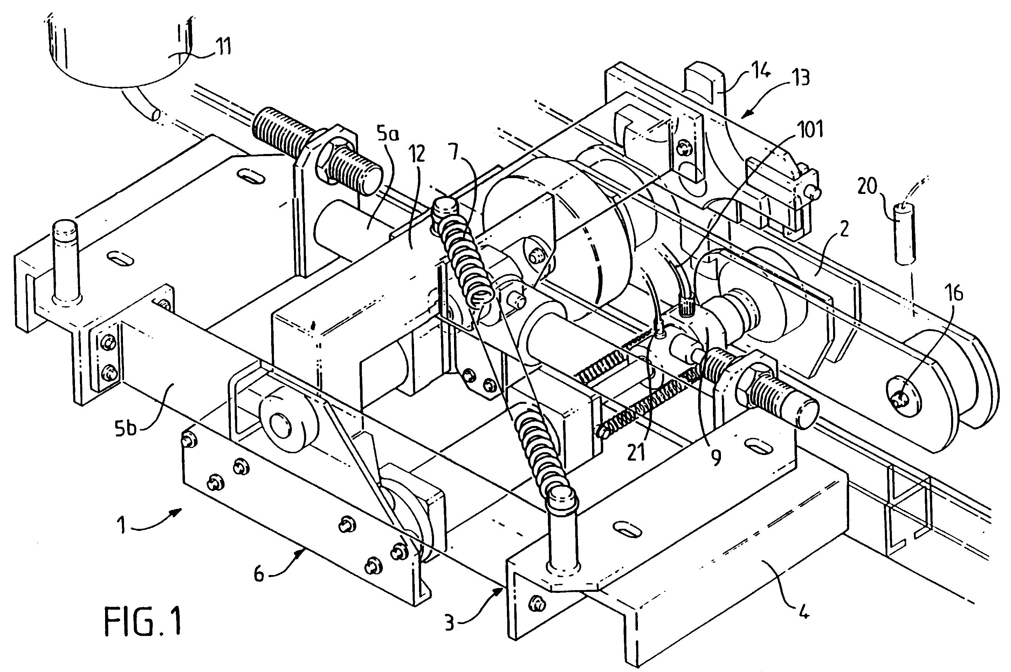

- la Figure 1 est une vue simplifiée, en perspective, du dispositif de l'invention ;
- la Figure 2 est une vue de dessus du dispositif de la Figure 1 ;

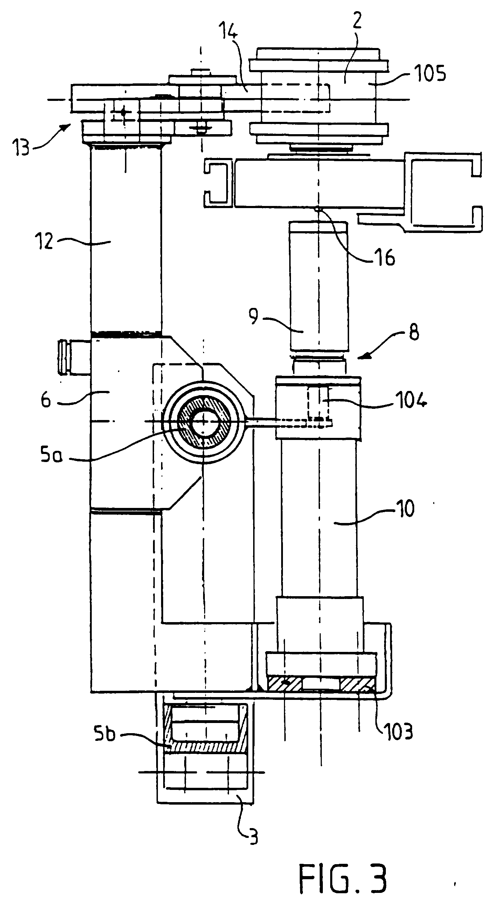

- la Figure 3 est une vue de face du dispositif de la Figure 1 ;

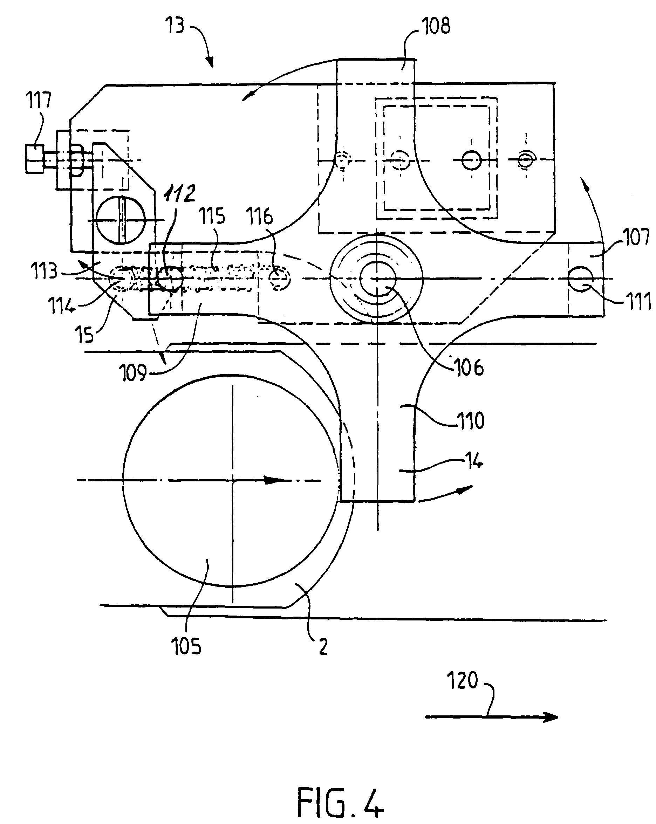

- la Figure 4 est une vue de détail d'une tête d'entraînement du dispositif de l'invention ;
- la Figure 5 est une vue de détail d'une tête d'injection de l'invention en fin d'injection ;
- la Figure 6 est une vue de détail d'un autre mode de réalisation d'une tête d'injection de l'invention ;
- la Figure 7 est un exemple de mesure fournie par le capteur de déplacement.
- la Figure 8 est un exemple de traitement de mesures fournies par le capteur de déplacement mis en oeuvre dans l'invention.

Le dispositif de lubrification est désigné dans son ensemble par la référence 1; Il est destiné à la lubrification de la chaîne 2 d'un escalier mécanique.

Le support 3 est avantageusement en forme de U, dont les deux extrémités libres sont dirigées vers la chaîne à lubrifier et sont destinées à porter le système de rails 5. La base ou fond du U est alors également approximativement parallèle à la chaîne 2.

Ce support 3 est destiné à être rendu solidaire par tout moyen voulu de la structure de l'escalier mécanique ; il peut, par exemple, être fixé au moyen d'un système d'attaches rapides sur un châssis 4, lui-même rendu solidaire de la structure de l'escalier par soudage ou boulonnage. On comprend qu'ainsi, il peut être aisément monté ou démonté, ce qui permet l'utilisation d'un même dispositif de lubrification sur plusieurs chaînes. Nous verrons plus loin qu'il peut également être placé à poste fixe sur la chaîne et à volonté mis en service ou débrayé.

Ce support 3 porte un système de rails 5 placé, en service, au voisinage de la chaîne 2 dans une zone où son parcours est rectiligne et parallèlement à celui-ci. Ce système de rails comporte, par exemple, un rail 5a et un profilé 5b. Ce système de rails forme un système de guidage et porte un chariot mobile 6, qui porte lui-même des systèmes 8 d'injection de lubrifiant.

Ainsi, la chaîne 2, munie de graisseurs 16, étant en mouvement continu, les systèmes 8 d'injection de lubrifiant peuvent entrer en coopération avec les graisseurs 16, accompagner leur mouvement par déplacement du chariot mobile 6 sur le système de rails 5 et puis, après libération des graisseurs 16, reprendre par mouvement inverse du chariot mobile 6 leur position initiale, de manière à se trouver prêts à commencer un nouveau cycle.

L'invention prend en compte les incertitudes rencontrées dans la pratique du fonctionnement d'un tel dispositif. En effet, bien loin d'être des systèmes parfaits qui seraient tous identiques et composés de la répétition d'un même motif, les chaînes, soit par leur fabrication elle-même, soit en raison de l'usure qu'elles subissent lors de leur utilisation, n'ont pas toujours exactement la même structure et la position ou même la présence des graisseurs sont incertaines.

Le dispositif de l'invention permet, d'une part, au dispositif de lubrification de se placer et de coopérer convenablement avec un graisseur se trouvant à une position même relativement éloignée de sa position théorique et au cas où cela s'avèrerait impossible, c'est-à-dire qu'il raterait un graisseur ou que le graisseur ne serait pas présent, l'injection intempestive de lubrifiant serait évitée.

Chaque système d'injection 8 comporte une tête de graissage 9 située à l'extrémité d'un vérin 10. La tige 18 du vérin 10 a un mouvement transverse par rapport à la chaîne 2. Ce vérin 10 est, de préférence, un vérin pneumatique, mais peut également être un vérin hydraulique.

Chaque tête de graissage 9 comporte un corps, généralement cylindrique 24, comportant un alésage arrière par rapport à la chaîne 2, dans lequel coulisse la tige 18 du vérin 10. L'étanchéité de l'assemblage est assurée par un joint 25 torique. Une chambre d'alimentation 30 permet de définir un volume spécifique de lubrifiant à injecter en fonction des caractéristiques de la chaîne 2 à lubrifier ; le flexible 101 en provenance du réservoir de lubrifiant 11 débouche dans cette chambre d'injection 30 par l'intermédiaire d'un clapet antiretour 26 ; un bouchon d'injection 27 vient, lors du fonctionnement, se mettre en contact avec un graisseur 16 et possède, en son fond, une soupape de fermeture 17 ne s'ouvrant qu'au contact du graisseur 16 : la course de déplacement de la tige 18 du vérin 10 est donc directement proportionnelle au volume de lubrifiant injecté à travers le graisseur 16.

Cette tête d'injection 9 comporte également un ressort 19 situé derrière la soupape de fermeture 17, et une rondelle 28 servant aussi de butée de fin de course pour la tige 18 du vérin 10 et munie, en son centre, d'un orifice 29 pour le passage du lubrifiant présent dans la chambre d'alimentation.

Les diamètres de la soupape 17, de la chambre d'alimentation 30 et de la tige 18 du vérin 10 sont définis de sorte que la soupape 17 ne puisse pas s'ouvrir sous l'action de la pression interne du lubrifiant. De ce fait, dans l'éventualité où un graisseur 16 manquerait ou serait bloqué, le lubrifiant ne peut pas sortir de la tête d'injection ; le capteur 21 enregistre alors le fait que la tige 18 du vérin 10 n'est pas parvenue en fin de course et l'anomalie est enregistrée par un système informatique avec le numéro du graisseur concerné. Le bouchon 27 d'injection présente une ouverture conique 102 et le vérin 10 est fixé au chariot 6 par l'intermédiaire de deux joints élastiques, l'un 103 à sa base arrière, l'autre 104 à l'autre extrémité du vérin 10.

Le chariot mobile 6 comporte, dans cet exemple de réalisation, deux systèmes de lubrification 8 comportant chacun une tête de graissage 9 et un vérin 10. La tête de graissage 9 est reliée à un réservoir de lubrifiant sous pression 11 et il peut être disposé sur toute partie de l'escalier mécanique.

Le chariot mobile 6 comprend également un bras d'entraînement 12 portant une tête d'entraînement 13, laquelle coopère avec la chaîne 2 : ce bras constitue un moyen d'accouplement transmettant le mouvement de la chaîne 2 au chariot mobile 6 par l'intermédiaire de la tête d'entraînement 13.

La tête d'entraînement 13 comprend une roue cruciforme 14, dont l'extrémité des branches est en contact avec les rouleaux 105 de la chaîne à lubrifier, et dont le mécanisme de commande est constitué par un système à cliquet 15 permettant de bloquer la roue dans la phase d'entraînement du chariot par la chaîne 2 et de la libérer en fin de cycle de lubrification.

Ainsi, la tête d'entraînement permet de positionner le chariot 6 par rapport à la chaîne 2 en début de cycle, de telle façon que les systèmes de lubrification 8 soient situés exactement en face des graisseurs 16 de la chaîne 2, quelles que soient les causes de désalignement axial, et d'entraîner le chariot mobile 6 pendant la phase d'injection du lubrifiant en utilisant l'énergie motrice de la chaîne 2, ce qui présente l'avantage de ne pas imposer d'efforts de cisaillement sur les graisseurs 16 et également de suivre les variations de vitesse de la chaîne 2 ; de libérer le chariot mobile 6, lorsque celui-ci arrive en butée afin que le ressort de rappel 7 le ramène à la position de début du cycle.

Le dispositif 1 comprend également un compresseur d'air basse pression destiné à alimenter les vérins 10 et le réservoir de lubrifiant 11 par l'intermédiaire de flexibles munis de raccords rapides et également à actionner le système de commande des vérins 10. Avantageusement, le déplacement longitudinal du chariot mobile 6 sur le rail 5 pilote la connexion de la tête de graissage 9 sur la chaîne par mise sous pression de la chambre de sortie du vérin 10, et la déconnexion de la tête de graissage 9 de la chaîne par mise sous pression de la chambre de rentrée du vérin 10, respectivement en début et en fin de cycle de lubrification.

Dans l'exemple représenté où le chariot mobile 6 porte deux têtes de graissage 9, la roue 14, mobile en rotation autour de l'axe 106, solidaire du chariot 6, comporte quatre branches 107 à 110 destinées chacune à entrer dans les maillons de la chaîne entre les rouleaux 105.

Une sur deux de ces branches 107, 109 porte des ergots 111, 112 destinés à coopérer avec le cliquet 113. Le cliquet 113 comporte une ouverture 114, faisant quelques degrés avec la perpendiculaire à la trajectoire des ergots 111 et 112. Un ressort 115 fixé, d'une part, sur le cliquet 113 et, d'autre part, sur un point fixe 116, rappelle le cliquet 113 dans la position de blocage de la roue 14. Un actionneur 117 est à même d'exercer une force permanente à l'encontre du ressort 115, de manière à libérer la roue 14 et à placer le dispositif de lubrification en état de repos entre deux opérations de lubrification.

Lorsque l'on veut graisser la chaîne 2, le chariot 6 est positionné par le ressort de rappel 7 du côté amont sur le système de rails 5 porté par le support 3 en U : la roue cruciforme 14, bloquée en rotation par le système à cliquet 15, est en contact avec un rouleau 105 de la chaîne qui avance dans la direction 120, ce qui positionne les têtes d'injection 9 exactement en face des graisseurs 16 et 121 de la chaîne 2 et permet à la chaîne 2 d'entraîner le chariot 6 en translation ; ces têtes d'injection 9 sont alors poussées par les vérins 10 jusqu'à venir en contact des graisseurs 16 et 121 ; la soupape 17 est ouverte par l'action du vérin 10 et par le graisseur 16 ou 121, et le lubrifiant est injecté dans le graisseur 16 sous l'action de la tige 18 du vérin 10, laquelle fait office de piston.

En bout de course, le chariot mobile 6 parvient en butée en aval sur le système de rails 5 porté par le support 3 en U : la chaîne 2, par son mouvement, libère le cliquet 15, ce qui a pour effet de rendre la roue cruciforme 14 libre sur son axe, et donc de désolidariser le chariot mobile 6 de la chaîne 2 ; le chariot 6 est immédiatement ramené en position amont par le ressort de rappel 7.

Juste avant que le chariot ne parvienne en butée, les vérins 10 déconnectent les têtes d'injection 9 des graisseurs 16 en se rétractant sous l'action du distributeur, la soupape 17 se referme sous l'action du ressort 19 et le lubrifiant est introduit dans la chambre 30 sous l'action de la pression du réservoir 11 et de la tige 18 du vérin 10 dans sa course arrière.

Le cliquet 15 bloque la roue cruciforme 14, après que celle-ci ait accompli une rotation de 180°. Le chariot 6 est alors à nouveau solidarisé avec la chaîne 2 et un nouveau cycle de lubrification commence.

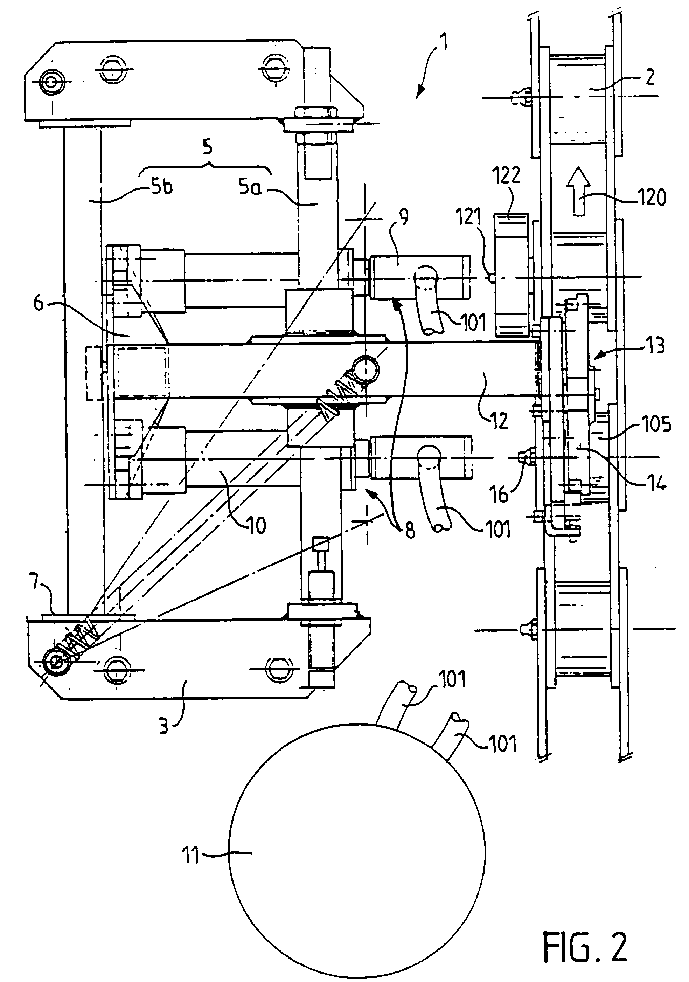

Ainsi, pendant que les têtes de graissage accompagnent le mouvement des graisseurs 16 et 121, l'opération de lubrification a pu être réalisée. La réalisation du déplacement transverse des têtes de graissage par des vérins pneumatiques leur permet de coopérer avec des graisseurs 16 et 121 en des positions transverses variées. Tel que représenté sur la Figure 2, le graisseur 121 est porté par un rouleau 122, comme cela est traditionnel sur les chaînes de Galles, il se trouve donc être transversalement décalé par rapport au graisseur 16.

Le positionnement longitudinal du chariot 6, réalisé par appui de la roue cruciforme 14 sur le rouleau 105, est précis puisque le graisseur est lui-même directement lié à ce rouleau. Le dispositif de lubrification qui coopère avec deux graisseurs 16 et 121, longitudinalement côte à côte, assure donc une bonne précision de positionnement par rapport à l'un et l'autre de ces graisseurs, malgré les phénomènes d'usure éventuels ou les éventuelles irrégularités de mouvement de la chaîne. Les fixations élastiques 103, 104 (silentbloc) sur lesquelles sont fixés les vérins 10, coopérant avec l'ouverture conique 102 du bouchon 27 d'injection, permettent, d'une part, que chaque tête de graissage 9 trouve le graisseur 16 qui lui est destiné et, d'autre part, qu'il se positionne convenablement, l'un dans l'axe de l'autre, et assure le fonctionnement voulu de la soupape 17.

Pendant que le chariot 6 se déplace sur le système de rails 5, la force de rappel exercée par le ressort 7, est suffisamment faible et déterminée relativement à la force de rappel exercée par le ressort 115 de cliquet, de telle sorte que la roue cruciforme 14 soit immobilisée par le cliquet 113. Par contre, dès que le chariot 6 entre en contact, en fin de course, avec le support 3, il est immobilisé et la roue cruciforme 14 qui continue à être entraînée par la chaîne 2, exerce par l'intermédiaire de l'ergot 112 une force beaucoup plus importante sur le cliquet 113, à l'encontre du ressort 115, ce qui produit la libération de l'ergot 12 par rapport au cliquet 113. La roue 14 est alors momentanément libérée, la branche 110 quitte la chaîne, la branche 111 s'engage dans le maillon suivant, la branche 108 se trouve face au cliquet 113, mais ne s'y arrête pas puisqu'elle ne porte pas d'ergot, elle s'engage donc à son tour dans le maillon suivant, ce qui produit l'enclenchement de l'ergot 111 porté par le bras 107 de la roue 14 dans le cliquet 113. Pendant ce temps, par effet du ressort 7, le chariot 6 a repris sa position de départ à l'autre extrémité du système de rails 5 et le cycle de lubrification peut recommencer, la chaîne ayant avancé de deux maillons.

On comprend, bien entendu, que le nombre de têtes de graissage 9 porté par le chariot 6 détermine la forme et principalement le nombre de branches et d'ergots de la roue cruciforme 14.

Lors de l'opération de graissage, d'une part, chacun des graisseurs 16, 121 destinés à être lubrifiés est identifié, généralement par comptage, et simultanément, le mouvement de la tige 18 du vérin 10 est mesuré.

Dans un système simplifié, lors de chaque injection de lubrifiant, le détecteur inductif 21 fixé sur le corps de la tête d'injection 9 identifie le passage d'une gorge 130 pratiquée sur la tige 18 du piston 10, ce qui signifie que le volume défini de lubrifiant a été effectivement injecté dans la chaîne 2 puisqu'en cas de défaillance (par exemple, graisseur manquant ou bloqué), la soupape 17 ne peut pas s'ouvrir et la course de la tige 18 du vérin 10 est stoppée. Cette information est également enregistrée en continu par l'ordinateur. Ces informations permettent ainsi d'identifier les anomalies et de réparer les graisseurs endommagés.

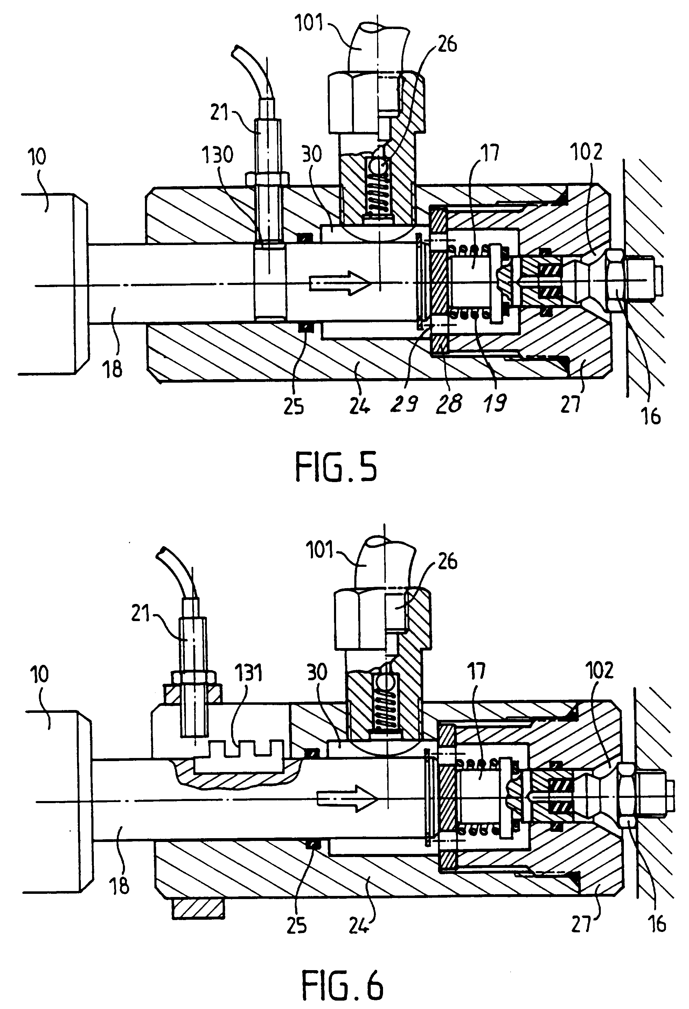

Dans un système plus complet présentant de nombreux avantages, la tige 18 du vérin 10 est munie d'une clavette 131 comportant plusieurs gorges qui coopèrent avec un détecteur inductif 21, ce qui permet, tel que représenté sur la Figure 6, d'acquérir des informations représentant le déplacement complet de la tige 18 du piston 10 par rapport au corps 24 de la tête de graissage 9 en fonction du temps pendant l'opération de lubrification. Ainsi, à chaque graisseur 16, 121, est associée une courbe complète représentant la course d'injection de lubrifiant dans la tête de graissage.

Les données représentatives de cette courbe associées au numéro d'identification du graisseur sont mises en mémoire et susceptibles de tout traitement individuel ou statistique ultérieur.

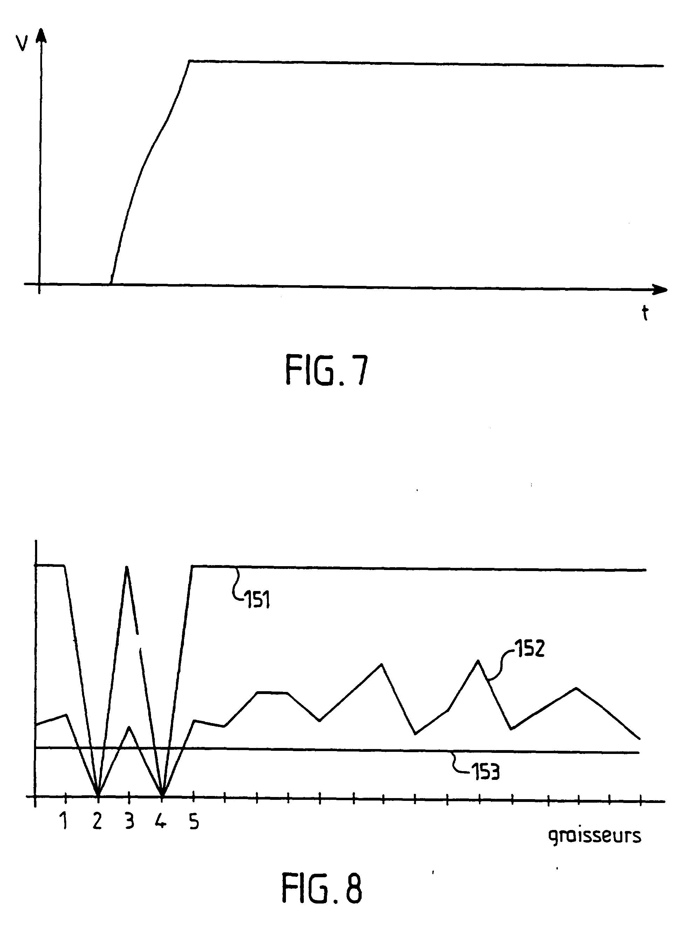

La Figure 7 représente, pour un graisseur particulier, le volume de lubrifiant injecté en fonction du temps.

La Figure 8 représente, pour les différents graisseurs dont les références sont portées en abcisse, le volume 151 total de lubrifiant injecté d'une part, et la durée 152 de l'injection d'autre part, par rapport à une durée de référence 153.

A titre d'exemple, une absence de graisseur ou un graisseur bouché est indiqué par un volume 151 de lubrifiant injecté nul (graisseur 2, 4).

Un défaut d'alimentation en lubrifiant du réservoir 11 se traduirait par une durée 152 d'injection (non représentée ici) inférieure à la référence 151.

Le dispositif de l'invention rend ainsi possible le contrôle de la qualité de la lubrification réalisée et, par comparaison des données acquises lors de lubrifications successives de la même chaîne, l'étude et la gestion de son évolution, de son usure et donc le contrôle de sa qualité.

L'utilisation d'un tel dispositif permet de mécaniser et donc de fiabiliser l'opération de lubrification ; elle permet de réduire le temps nécessaire à cette opération dans des proportions très importantes (environ deux heures pour une personne au lieu des dix heures à deux personnes selon la méthode traditionnelle).

Ce dispositif permet également d'établir, de manière non contestable, la preuve de la réalisation de l'opération de lubrification.

Il permet en outre de diagnostiquer les anomalies liées à la lubrification de la chaîne et contribue à augmenter de manière très importante la durée de vie des chaînes et donc à réduire le taux d'immobilisation des escaliers mécaniques.

Les signes de référence insérés après les caractéristiques techniques mentionnées dans les revendications, ont pour seul but de faciliter la compréhension de ces dernières, et n'en limitent aucunement la portée.

## Revendications

1. Dispositif de lubrification automatique d'une chaîne (2) se déplaçant continuellement et munie de graisseurs (16), comprenant un support (3) destiné à être fixé au voisinage de la chaîne (2) ; un réservoir (11) de lubrifiant ; un chariot (6) mobile sur le support (3) le long de la chaîne (2) et portant au moins un mécanisme (8) d'injection de lubrifiant comprenant une tête de graissage (9) et un moyen (10) de déplacement transversal de la tête de graissage (9) pour amener cette dernière en contact avec un graisseur (16) de la chaîne (2) à chaque cycle de lubrification ; un moyen (12, 13) d'accouplement du chariot mobile (6) à la chaîne (2) de façon à déplacer longitudinalement le chariot (6) par la chaîne (2) ; et un moyen (7) de rappel du chariot (6) à sa position initiale une fois que la tête de graissage (9) a injecté du lubrifiant dans le graisseur (16) ; caractérisé en ce que le moyen d'accouplement (12, 13) comprend un bras d'entraînement (12) solidaire du chariot mobile (6) et portant une tête d'entraînement (13) comprenant une roue (14) à branches radiales (107-110) mobile autour d'un axe transversal à la chaîne (2) et bloquée en rotation au début de chaque cycle de lubrification de façon que l'une des branches (107, 110) de la roue (14) soit en contact d'appui avec un axe correspondant de la chaîne (2) pour assurer le positionnement et l'entraînement longitudinal du chariot (6) jusqu'à une position de fin de course du chariot (6) à laquelle la roue (14) est débloquée automatiquement par le mouvement de la chaîne (2) et la force de rappel exercée à cette position par le moyen (7) sur le chariot (6) qui est ramené à sa position initiale de début d'un cycle suivant de lubrification.

2. Dispositif selon la revendication 1, caractérisé en ce que la roue (14) à branches radiales (107-110) est bloquée par un levier formant cliquet (15) monté sur la tête d'entraînement (13) et en engagement avec l'une des branches (107-110) de la roue (14) pour bloquer une autre branche adjacente en appui sur un axe de la chaîne (2) suivant le sens d'avancement de cette dernière jusqu'à la position de fin de course du chariot (6) et en ce que le levier formant cliquet (15) libère la branche correspondante de la roue (14) en fin de course du chariot (6) par la force d'entraînement exercée par l'axe de la chaîne (2) sur la branche adjacente de la roue (14) qui est alors entraînée librement en rotation de façon qu'une branche de la roue (14) s'engage avec un axe suivant de la chaîne (2) et l'autre branche suivante de la roue (14) s'engage en position de blocage avec le levier formant cliquer (15).

3. Dispositif selon la revendication 2, caractérisé en ce que le levier formant cliquet (15) s'engage avec une branche de la roue (14) sous l'action d'une force de rappel exercée par un ressort (115) fixé à une extrémité de levier formant cliquet (15) et à la tête d'entraînement (13) et en ce que le moyen de rappel (7) du chariot (6), en position de fin de course de ce dernier, exerce une force de rappel suffisante pour permettre à la force d'entraînement de l'axe de la chaîne (2) de libérer le levier formant cliquet (15) contre la force de rappel de son ressort correspondant (115).

4. Dispositif selon la revendication 2 ou 3, caractérisé en ce que la roue (14) est cruciforme et deux opposées (107, 109) de ses branches (107-110) comprennent respectivement deux ergots (111, 112) coopérant avec le levier formant cliquet (15) pour bloquer la roue (14) à chaque cycle de lubrification.

5. Dispositif selon l'une des revendications précédentes, destiné à la lubrification d'une chaîne formée de maillons articulés autour de rouleaux (105), caractérisé en ce que les branches (107-110) de la roue (14) sont aptes à coopérer avec les maillons et à être positionnées contre un rouleau (105) pour assurer le positionnement et l'entraînement longitudinal précité du chariot (6).

6. Dispositif selon l'une des revendications précédentes, caractérisé en ce que le moyen de déplacement transversal d'une tête de graissage (9) est un vérin (10) positionné en face d'un graisseur (16) de la chaîne (2) lorsque cette dernière est accouplée au chariot (6) par le moyen d'accouplement (12, 13) et déconnectant la tête de graissage (9) du graisseur (16) juste avant que la chariot (6) soit en fin de course.

7. Dispositif selon l'une des revendications précédentes, caractérisé en ce que chaque tête de graissage (9) comprend une soupape de fermeture (17) dont l'ouverture est commandée par le contact de la tête de graissage (9) avec un graisseur (16, 121) pour autoriser le passage du lubrifiant provenant du réservoir (11) dans le graisseur (16, 121).

8. Dispositif selon l'une des revendications précédentes, caractérisé en ce que le moyen de déplacement transversal (10) de la tête de graissage (9) est fixé au chariot (6) par des joints élastiques (103, 104) et chaque tête de graissage (9) a une ouverture (102) de réception d'un graisseur de forme conique.

9. Dispositif selon l'une des revendications précédentes, caractérisé en ce que le moyen de rappel du chariot (6) est un ressort (7).

10. Dispositif selon l'une des revendications 1 à 9, caractérisé en ce qu'il comprend un capteur de déplacement permettant la mesure de la course d'injection de lubrifiant dans la tête de graissage (9).

11. Dispositif selon la revendication 10, caractérisé en ce qu'il comprend des moyens informatiques permettant la mise en mémoire et le traitement des mesures fournies par les capteurs de déplacement pour chaque graisseur.

12. Dispositif selon la revendication 11, caractérisé en ce que la mesure fournie par le capteur de déplacement et mise en mémoire est la courbe de volume de lubrifiant injecté à travers le graisseur (16) en fonction du temps.

## Patentansprüche

1. Vorrichtung zum selbstständigen Schmieren einer sich fortwährend bewegenden und mit Schmiernippeln (16) versehenen Kette (2), mit einem zur Befestigung in der Nachbarschaft der Kette (2) bestimmten Träger (3) ; einem Schmiermittelbehälter (11) ; einem auf dem Träger (3) entlang der Kette (2) bewegbaren Wagen (6), der wenigstens einen Schmiermitteleinspritzungsmechanismus (8) mit einem Schmierkopf (9) und einem Mittel (10) zur Querverschiebung des Schmierkopfes (9), um diesen letzteren in Berührung mit einem Schmiermittel (16) der Kette (2) bei jedem Schmierarbeitsspiel zu bringen, trägt ; einem Mittel (12, 13) zur Kupplung des bewegbaren Wagens (6) mit der Kette (2), um den Wagen (6) in Längsrichtung durch die Kette (2) zu bewegen ; und einem Mittel (7) zur Rückstellung des Wagens (6) in seine Ursprungsstellung, hat einmal der Schmierkopf (9) Schmiermittel in den Schmiernippel (16) eingespritzt ; dadurch gekennzeichnet, daß das Kupplungsmittel (12, 13) einen mit dem bewegbaren Wagen (6) fest verbundenen Antriebsarm (12) umfaßt, der einen Antriebskopf (13) mit einem um einen Querbolzen der Kette (2) herum bewegbaren Rad (14) mit radialen Armen (107-110) trägt, welches Rad am Anfang jedes Schmierarbeitsspiels gegen Drehung festgehalten wird, so dass der eine der Arme (107, 110) des Rades (14) in Abstützberührung mit einem entsprechenden Bolzen der Kette (2) ist, um das Positionieren und den Längsantrieb des Wagens (6) bis zu einer Endhubstellung des Wagens (6) zu gewährleisten, in welcher das Rad (14) durch die Bewegung der Kette (2) und die in dieser Stellung durch das Mittel (7) auf den Wagen (6) ausgeübte Rückstellkraft automatisch freigesetzt wird, wobei der Wagen in seine Ursprungsstellung am Anfang eines nachfolgenden Schmierarbeitsspieles zurückgeführt wird.

2. Vorrichtung nach Anspruch 1, dadurch gekennzeichnet, daß das Rad (14) mit radialen Armen (107-110) durch einen an dem Antriebskopf (13) angeordneten sperrklinkenförmigen Hebel (15) festgehalten wird, welcher mit einem der Arme (107-110) des Rades (14) in Eingriff ist, um einen anderen benachbarten Arm in Abstützung an einem Bolzen der Kette (2) in der Vorwärtsbewegungsrichtung dieser letzteren bis zu der Endhubstellung des Wagens (6) festzuhalten, und daß der sperrklinkenförmige Hebel (15) den entsprechenden Arm des Rades (14) am Ende des Hubes des Wagens (6) durch die durch den Bolzen der Kette (2) auf den benachbarten Arm des Rades (14) ausgeübte Antriebskraft freigibt, welches Rad dann frei zur Drehung angetrieben wird, damit ein Arm des Rades (14) mit einem nachfolgenden Bolzen der Kette (2) in Eingriff kommt und der andere nachfolgende Arm der Kette (14) in der Sperrstellung mit dem sperrklinkenförmigen Hebel (15) in Eingriff kommt.

3. Vorrichtung nach Anspruch 2, dadurch gekennzeichnet, daß der sperrklinkenförmige Hebel (15) mit einem Arm des Rades (14) unter der Wirkung einer durch eine an einem Ende des sperrklinkenförmigen Hebels (15) und an dem Antriebskopf (13) befestigte Feder ausgeübten Rückstellkraft in Eingriff kommt und daß das Rückstellmittel (7) des Wagens (6) in der Endhubstellung dieses letzteren eine ausreichende Rückstellkraft ausübt, um der Kraft zum Antrieb des Bolzens der Kette (2) zu gestatten, den sperrklinkenförmigen Hebel (15) entgegen der Rückstellkraft seiner entsprechenden Feder (115) freizugeben.

4. Vorrichtung nach Anspruch 2 oder 3, dadurch gekennzeichnet, daß das Rad (14) kreuzförmig ist und zwei entgegengesetzte (107, 109) seiner Arme (107-110) jeweils zwei Zapfen (111, 112) aufweisen, die mit dem sperrklinkenförmigen Hebel (15) zusammenwirken, um das Rad (14) bei jedem Schmierarbeitsspiel festzuhalten.

5. Vorrichtung nach einem der vorangehenden Ansprüche, die zur Schmierung einer aus um Rollen (105) herum angelenkten Kettengliedern bestehenden Kette bestimmt ist, dadurch kennzeichnet, daß die Arme (107-110) des Rades (14) fähig sind, mit den Kettengliedern zusammenzuwirken und gegen eine Rolle (105) gestellt zu werden, um das Positionieren und den vorgenannten Längsantrieb des Wagens (6) zu gewährleisten.

6. Vorrichtung nach einem der vorangehenden Ansprüche, dadurch gekennzeichnet, daß das Mittel zur Querverschiebung eines Schmierkopfes (9) ein Kraftzylinder (10) ist, der gegenüber einem Schmiernippel (16) der Kette (2) gestellt ist, wenn die letztere an dem Wagen (6) durch das Kupplungsmittel (12, 13) angekuppelt ist und den Schmierkopf (9) von dem Schmiermittel (16) löst, gerade bevor der Wagen (6) sein Hubende erreicht.

7. Vorrichtung nach einem der vorangehenden Ansprüche, dadurch gekennzeichnet, daß jeder Schmierkopf (9) ein Schließungsventil (17) umfaßt, dessen Öffnen durch die Berührung des Schmierkopfes (9) mit einem Schmiermittel (16, 121) betätigt wird, um den Durchgang des von dem Behälter (11) herkommenden Schmiermittels in den Schmiernippel (16, 121) zu gestatten.

8. Vorrichtung nach einem der vorangehenden Ansprüche, dadurch gekennzeichnet, daß das Mittel (10) zur Querverschiebung des Schmierkopfes (9) an dem Wagen (6) durch elastische Verbindungen (103, 104) befestigt ist und jeder Schmierkopf (9) eine Öffnung (102) zur Aufnahme eines kegelförmigen Schmiernippels hat.

9. Vorrichtung nach einem der vorangehenden Ansprüche, dadurch gekennzeichnet, daß das Rückstellmittel des Wagens (6) eine Feder (7) ist.

10. Vorrichtung nach einem der Ansprüche 1 bis 9, dadurch gekennzeichnet, daß sie einen die Messung des Schmiermitteleinspritzhubes in dem Schmierkopf (9) gestattenden Weggeber umfaßt.

11. Vorrichtung nach Anspruch 10, dadurch gekennzeichnet, daß sie die Speicherung und die Behandlung der durch die Weggeber für jeden Schmiernippel gelieferten Meßungen gestattende Datenverarbeitungsmittel umfaßt.

12. Vorrichtung nach Anspruch 11, dadurch gekennzeichnet, daß die durch den Weggeber gelieferte und gespeicherte Meßung die Kurve des durch den Schmiernippel (16) hindurch eingepritzten Schmiermittelvolumen in Abhängigkeit der Zeit ist.

## Claims

1. Device for the automatic lubrication of a continuously moving chain (2) provided with greasers (16), comprising a support (3) intended to be fastened in the neighbourhood of the chain (2); a lubricant tank (11); a carriage (6) movable on the support (3) along the chain (2) and carrying at least one lubricant injection mechanism (8) comprising a greasing head (9) and a means (10) for the transverse displacement of the greasing head (9) to bring the latter in contact with one greaser (16) of the chain (2) at each lubrication cycle; a means (12, 13) for the coupling of the movable carriage (6) to the chain (2) so as to longitudinally displace the carriage (6) by the chain (2); and a means (7) for the return of the carriage (6) to its initial position once the greasing head (9) has injected lubricant into the greaser (16); characterized in that the coupling means (12, 13) comprises a drive arm (12) made fast to the movable carriage (6) and carrying a drive head (13) comprising a wheel (14) with radial arms (107-110) movable about an axis extending transversely of the chain (2) and locked against rotation at the beginning of each lubrication cycle so that one of the arms (107, 110) of the wheel (14) be in bearing contact with a corresponding pin of the chain (2) to ensure the positioning and the longitudinal driving of the carriage (6) to an end stroke position of the carriage (6) in which the wheel (14) is automatically unlocked by the motion of the chain (2) and the drawback force exerted in this position by the means (7) upon the carriage (6) which is brought back to its initial position of start of a following lubrication cycle.

2. Device according to claim 1, characterized in that the wheel (14) with radial arms (107-110) is locked by a pawl-like lever (15) mounted onto the drive head (13) and in engagement with one of the arms (107-110) of the wheel (14) for locking another adjacent arm bearing upon one pin of the chain (2) in the direction of motion of the latter up to the end stroke position of the carriage (6) and in that the pawl-like lever (15) releases the corresponding arm of the wheel (14) at the end of the stroke of the carriage (6) by the drive force exerted upon the pin of the chain (2) upon the adjacent arm of the wheel (14) which is then freely rotated so that one arm of the wheel (14) engages a next pin of the chain (2) and the following other arm of the wheel (14) engages the pawl-like lever (15) in the blocking position.

3. Device according to claim 2, characterized in that the pawl-shaped lever (15) engages one arm of the wheel (14) under the action of a drawback force exerted by a spring (115) fastened to one end of the pawl-like lever (15) and to the drive head (13) and in that the means (7) for returning the carriage (6) in the end stroke position of the latter exerts a drawback force sufficient to allow the force driving the pin of the chain (2) to release the pawl-like lever (15) against the drawback force of its corresponding spring (115).

4. Device according to claim 2 or 3, characterized in that the wheel (14) is cross-shaped and two opposite ones (107, 109) of its arms (107-110) comprise two studs (111, 112), respectively, co-operating with the pawl-like lever (15) for locking the wheel (14) at each lubrication cycle.

5. Device according to one of the foregoing claims, intended for the lubrication of a chain formed of links pivoted about rollers (105), characterized in that the arms (107-110) of the wheel (14) are adapted to co-operate with the links and to be positioned against a roller (105) to ensure the positioning and the aforesaid longitudinal drive of the carriage (6).

6. Device according to one of the foregoing claims, characterized in that the means for the transverse displacement of a greasing head (9) is a jack (10) positioned opposite a greaser (16) of the chain (2) when the latter is coupled to the carriage (6) by the coupling means (12, 13) and disconnecting the greasing head (9) from the greaser (16) just before the carriage (6) reaches the stroke end.

7. Device according to one of the foregoing claims, characterized in that each greasing head (9) comprises a closing valve (17) the opening of which is controlled by the contact of the greasing head (9) with one greaser (16, 121) to allow the passage of the lubricant coming from the tank (11) into the greaser (16, 121).

8. Device according to one of the foregoing claims, characterized in that the means (10) for the transverse displacement of the greasing head (9) is fastened to the carriage (6) by elastic joints (103, 104) and each greasing head (9) has an opening (102) for receiving one greaser of conical shape.

9. Device according to one of the foregoing claims, characterized in that the return means of the carriage (6) is a spring (7).

10. Device according to one of claims 1 to 9, characterized in that it comprises a displacement sensor allowing the measurement of the lubricant injection travel in the greasing head (9).

11. Device according to claim 10, characterized in that it comprises data processing means allowing the storage and the treatment of the measurements supplied by the displacement sensors for each greaser.

12. Device according to claim 11, characterized in that the measurement provided by the displacement sensor and stored is the curve of the volume of lubricant injected through the greaser (16) versus time.
